# EUROPEAN PATENT APPLICATION

(11) **EP 1 894 698 A1**
(43) Date of publication of application: **05.03.2008**
(21) Application number: 07012636.2
(22) Date of filing: 28.06.2007
(51) Int. Cl.: B29C 45/27

(54) **Distribution plate for moulds provided with silver injection nozzles**

(30) Priority: 30.08.2006 IT MC20060107
(71) Applicant: Mercuri, Franco, 62100 Macerata (IT)
(72) Inventor: Mercuri, Franco, 62100 Macerata (IT)
(74) Representative: Baldi, Claudio

(57) **Abstract**

The present invention relates to a distribution plate for moulds used for plastic injection moulding, which comprises internal channels (2) for heating means or fluids and a series of conduits (3) to deliver the moulding material in fluid state to the injection ducts (4a) provided in the nozzles (4) made of silver or silver alloys that are inserted in the plate (1).

## Description

The present patent application for industrial invention relates to a distribution plate used for plastic injection moulding, provided with injection nozzles made of silver or silver alloys.

According to the current moulding technique, traditional moulds are provided with a distribution plate of the moulding material equipped with one or more injection nozzles made of iron or copper alloys, each of them being designed to feed a cavity of the mould.

In such a distribution plate, the moulding material travels in fluid state through the delivery channels inside the plate and ends in the injection channels that are axially provided in the said nozzles.

According to the said technology, the moulding material that travels through the two series of ducts must maintain a high temperature in order to ensure best fluidity and adjustment to the moulding operation.

To that end, a similar distribution plate is provided with a heating system designed to maintain internal ducts at the ideal operating temperature.

Nevertheless, the presence of the heating system is not satisfactory, since the heat transferred to the moulding material through the internal ducts of the plate is not sufficient to maintain the said material at a temperature compatible with the necessary fluidity level, due to the inevitable cooling suffered through the nozzle injection ducts.

This lamentable effect is produced because injection nozzles are currently made of iron or copper alloys, i.e. materials with low heat conductivity.

Although the nozzles are inserted in the structure of the heated plate, the conductive heat transfer from the plate is not sufficient to maintain the ideal operating temperature of the moulding material.

In view of the above considerations, it is necessary to provide a specific heating system for each injection nozzle inserted into a distribution plate.

In particular, according to the said system, each nozzle is associated with a specific electrically powered plug, together with relevant device for instantaneous temperature control.

Evidently, the combination of the heating system of a distribution plate with the heating system of the corresponding nozzles guarantees a basically constant temperature of the moulding material throughout the entire travel, i.e. when it is introduced into the plate, delivered inside the nozzles and finally injected in the die cavities of the mould.

In spite of large diffusion, this technology is impaired by several difficulties and limitations.

The major problems refer to the need to associate the said heating plugs to the injection nozzles of the moulding material.

As a matter of fact, such a solution generates negative consequences both on the constructive functional features and from the economic viewpoint, due to the difficulties encountered to adjust the structure of the distribution plate, and also the high operating costs of the plate because of the energy needed to power the aforementioned heating plugs.

The specific purpose of the present invention is to overcome the said inconveniences, by providing a simpler structure for the heated plate, characterised by lower operating costs in terms of energy consumption.

Another purpose of the present invention is to ensure easier construction of the nozzles, by providing freedom of design in their dimensional configuration (with reference to length and injection section) to adjust to the specific requirements of each moulding operation at best.

A further purpose of the present invention is to provide injection nozzles with intrinsic anti-bacterial characteristics for improved health, being especially suitable for manufacturing products used in the medical field.

All the aforementioned purposes have been achieved with a revolutionary technology; more precisely, an alternative system has been devised to heat the injection nozzles inserted in a traditional distribution plate.

To that end, the traditional direct heating system with plugs has been replaced with a conduction heating system, in which the nozzles are able to maintain the operating temperature by means of the heat received from the body of the heated plate in which they are inserted.

To make this alternative solution possible, the injection nozzles are obtained from a metal with low specific heat capacity and high temperature conductivity capacity, associated with anti-bacterial properties.

Following to evaluations and tests, silver has been identified as the most suitable metal for the specific requirements; therefore, suitable alloys of the said metal can be advantageously used to obtain the injection nozzles in the distribution plate of the invention.

As a matter of fact, the use of similar nozzles made of silver alloys provides a significant series of advantages, as illustrated below.

The first and probably most relevant advantage consists in the elimination of the sophisticated, expensive systems that are used in traditional distribution plates to directly heat the nozzles. Evidently, the elimination of the different components (plugs, temperature control devices, cables) of the said heating systems has allowed to reduce the general dimensions of the distribution plate of the invention, and consequently, of the entire mould that cooperates with it.

Moreover, the high temperature conductivity and low specific heat capacity of silver allow to minimize the temperature differences between the delivery ducts of the moulding material of the heating plate and the injection ducts of the nozzles, without direct heating of the nozzles.

This also allows to accurately determine the temperature at any point of the distribution channels (obtained in the body of the heating plate) and the injection-delivery channels (obtained in the nozzles) of the plastic material.

Furthermore, the use of silver makes it possible to obtain especially long and/or thin nozzles, since the high temperature conductivity and low specific heat capacity of silver ensure the fast transmission of the heat produced by the heated plate also to nozzles with considerable length and reduced section.

Moreover, because of the intrinsic bactericidal properties of silver, the plate of the invention is especially suitable for moulding articles for medical use; this guarantees the non-proliferation of the bacteria that may be present in these products when stored or not used.

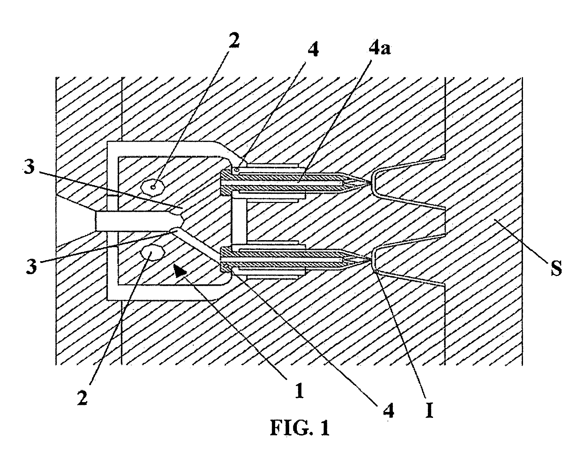

For major clarity the description of the invention continues with reference to the enclosed drawing, which is intended for purposes of illustration only and not in a limiting sense, whereby figure 1 is a section with an axial plane of the distribution plate of the invention, in combination with the corresponding mould.

With reference to the aforementioned figure, the plate of the invention (1) is traditionally provided with internal channels (2) for the heating means or fluids and a series of ducts (3) to deliver the moulding material in fluid state to the injection ducts (4a) provided in suitable nozzles (4) inserted in the said plate.

As shown in the figure, the function of the said nozzles (4) is to inject moulding material in fluid state inside corresponding die cavities (I) provided in the mould (S) associated with the plate (1).

As mentioned above, the peculiarity of the plate (1) consists in the fact that it is provided with nozzles made of silver alloys, capable of obtaining the heat that is necessary to maintain the required temperature of the moulding material throughout its travel from the structure of the plate of the invention by conduction.

For illustrative purposes only, the said nozzles (4) may be obtained from silver and copper alloys, with minimum 5% silver in weight.

The said alloy may contain a suitable percentage of one or more of the following metals with hardening effect, being understood that silver is not lower than 5% in weight: aluminium, calcium, gallium, strontium, germanium, platinum.

Although according to a preferred embodiment, the entire structure of each nozzle is obtained with the aforementioned silver alloys, alternative constructions of the said nozzles are possible.

For example, nozzles with an injection channel made of steel or copper alloys can be obtained, while the remaining mass is made of silver alloys; otherwise, the injection channel and the external sleeve of each nozzle may be made of the aforementioned steel or copper alloys, and the silver alloys are only used to provide a sort of intermediate gap between the injection channel and the external sleeve.

Also in these alternative constructive embodiments, the presence of a considerable quantity of silver alloys ensures excellent heat conduction, thus obtaining the same temperature conductivity performance as the nozzles that are entirely made of silver alloys.

In particular, the decision to maintain an injection channel made of steel or copper alloys in a nozzle made of silver alloys is justified by the higher anti-wear properties of steel and copper, which allow the application of the technology according to the present invention also to distribution plates that are used when moulding highly abrasive moulding materials loaded with calcium carbonate, fibreglass or similar products.

In similar situations, in fact, a nozzle provided with an injection channel made of a silver alloy would be subject to fast wear, with negative effects on the outcome of the moulding operation.

Likewise, it must be noted that the use of an external sleeve made of steel or copper alloys in a nozzle with a silver alloy core is justified by the fact that a similar sleeve ensures the high mechanical resistance of the entire nozzle, which is able to withstand the high operating stress caused by especially high injection pressure levels.

## Claims

1. Distribution plate for moulds used for plastic injection moulding, of the type comprising internal channels (2) for heating means or fluids and a series of conduits (3) to deliver the moulding material in fluid state to the injection ducts (4a) provided in the nozzles (4) inserted in the plate (1), being **characterised by** the fact that it is provided with nozzles (4) that are not provided with specific heating means and by the fact that the said nozzles (4) are made of silver or silver alloys.

2. Distribution plate for moulds used for plastic injection moulding as claimed in above claim, **characterised by** the fact that the nozzles (4) are made of a silver and copper alloy, in which silver is not lower than 5% in weight.

3. Distribution plate for moulds used for plastic injection moulding as claimed in above claim, **characterised by** the fact that the nozzles (4) are made of a silver and copper alloy that includes one or more of the following metals with hardening effect: aluminium, calcium, gallium, strontium, germanium, platinum.

4. Distribution plate for moulds used for plastic injection moulding as claimed in one of above claims, **characterised by** the fact that the nozzles (4) are provided with an injection channel (4a) made of steel or copper alloys, and the remaining mass is made of silver or silver alloys.

5. Distribution plate for moulds used for plastic injection moulding, as claimed in one of claims 1 to 3, **characterised by** the fact that the nozzles (4) are provided with an internal injection channel (4a) and an external sleeve made of steel or copper alloys, and the remaining mass between them is made of silver or silver alloys.
